# EUROPEAN PATENT APPLICATION

(11) **EP 1 106 125 A1**
(43) Date of publication of application: **13.06.2001**
(21) Application number: 00610127.3
(22) Date of filing: 06.12.2000
(51) Int. Cl.: A47J 19/06, A47J 19/00

(54) **Method for the pressing of juice out of bulbs and means for the execution of the method**

(30) Priority: 06.12.1999 DK 173999
(71) Applicant: Eva Denmark A/S, 2610 Roedovre (DK)
(72) Inventor: Folkjaer, Steen, 8600 Silkeborg (DK)
(74) Representative: Larsen, Hans Ole

(57) **Abstract**

According to the invention, the pressing of juice out of bulbs, for example garlic, can be effected in a garlic presser (4), where the bulb (3) is packaged in a bag (1).

The bag (1) is made of a material through which the bulb juice can permeate, so that when the bag (1) with the bulb (3) are pressed together in the pressing chamber (5), only the juice (9) will be pressed out.

The remains of the bulb, the pulp with the membrane, are retained in the bag (1), and can be removed from the presser (4) without any risk of the user coming into contact with the bulb (3).

## Description

### Background of the invention

The invention concerns a method for pressing juice/oil from bulbs such as garlic, which bulbs or parts hereof are placed in a garlic pressing chamber and compressed for extraction of the juice, the oil, and means for the execution of the method.

Juice from bulbs, such as from garlic, is used to a wide extent as seasoning in the preparation of food, and is also used as a medicament.

The pressing-out of the bulb juice is a process which is made difficult by the strong-smelling oil which the bulb contains.

This can give rise to great inconvenience, in that the juice often gets on the fingers and can be difficult to wash off.

For the extraction of the juice, use is normally made of a garlic presser, in the pressing chamber of which one or more so-called cloves are exposed to a compression against a perforated bottom through which the juice and the remains of the bulb, the pulp, is pressed. Hereafter, this mixture of firm and fluid constituents can be scraped off and used to serve the purpose for which it is intended.

After use, the garlic presser must be thoroughly cleaned, which is both troublesome and, as mentioned above, involves direct contact which gives rise to strongly-smelling fingers.

### The object of the invention

It is the object of the invention to remedy these inconveniences connected with the use of garlic, and this is achieved by the method according to the invention, in that the bulb is placed in a bag, said bag with the bulb being placed in the pressing chamber, after which the bag with the bulb are compressed, so that the juice, the oil, is pressed out.

In a surprisingly simple manner, there is hereby achieved a solution to the problem of direct contact with the bulb, in that after being pressed the bulb can simply be removed and discarded in the bag. Moreover, an expedient filtration of the juice from the pulp with the garlic membrane is achieved, in that only the juice is pressed out through the bag and the bottom of the garlic presser. Both the pressing-out of the juice and the subsequent cleaning of the presser hereby become easier, and the risk of getting garlic juice on the fingers is eliminated.

As disclosed in claim 2, by using the bag as packaging for the bulb or parts hereof, the bulb can be stored in the bag and sold packaged therein. This makes the use of the garlic even more simple for the user.

As disclosed in claim 3, by making the bag of a tight material, the bulb will keep longer, the reason being that the bag will only become permeable to juice once the bag and the bulb are compressed.

As disclosed in claim 4, to use a bag made of vegetable material, such as paper, corn-starch, cotton or the like, the bag with the remains of the bulb can be composted as "green waste".

As disclosed in claim 5, to use a bag where that part of the bag in which the bulb is contained is porous, the remaining part of the bag can serve as handling part, whereby it can be both hung up and gripped in a secure manner both when being placed in the bulb presser as well as when being removed. Moreover, it is possible to provide printing on this part of the bag.

Finally, as disclosed in claim 6, it is expedient to provide the bottom of the pressing chamber with elongated openings instead of round holes, in that in the execution of the method there is no need for the remains of the bulb, the pulp, to be held back, in that these are retained in the bag. The juice can hereby run more easily from the bottom of the garlic presser.

### The drawing

In the following, an example embodiment according to the invention will be described in more detail with reference to the drawing, where
- fig. 1: shows a bag with bulb seen from the front,
- fig. 2: shows the bag with bulb seen from the side, and
- fig. 3: shows the bag with bulb in a garlic presser, partly in section.

### Description of the example embodiment

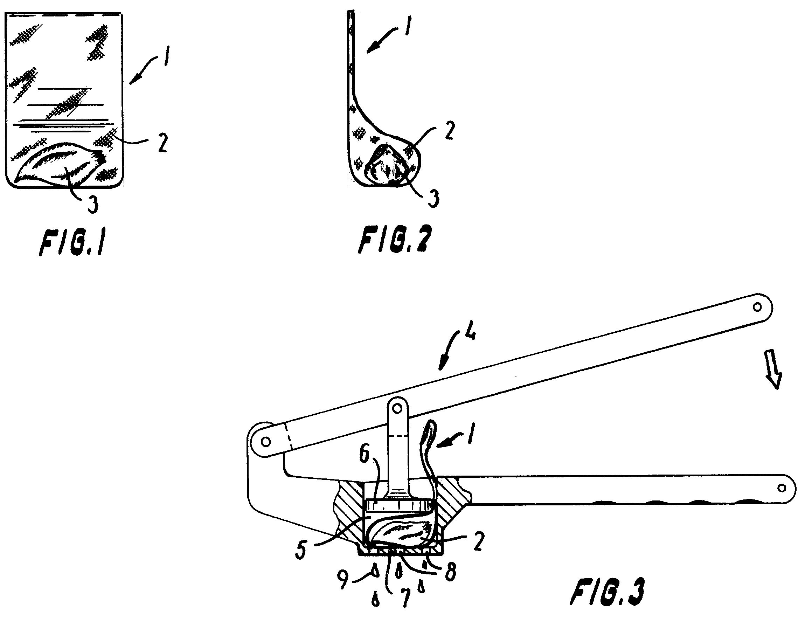

The bag, which can be used in accordance with the method, can be in the form of an elongated bag 1 as shown in figs. 1 and 2.

The bag must be of a suitable size and herewith of such a volume that one or more bulb cloves 3 can lie in the bottom of the bag.

At least that part of the bag which constitutes its bottom 2 must be porous, so that the bulb juice can pass through the wall of the bag, when the pressing takes place.

The object of the remaining part of the bag is to serve as a handling part and possibly also as means for hanging up the packaged bulb.

This provides the possibility of selling the bulbs packaged in such a bag, whereby it is packaged as well as ready for use in a garlic presser.

The bag material can preferably be a vegetable material such as paper, cornstarch, cotton or the like, which does not give off taste and which can be composted with the bulb remains after use.

Instead of packaging the bulb, the users themselves can place the bulb in an empty bag, which thereafter constitutes the packaging for the same purpose.

The method will now be described with reference to fig. 3.

A garlic presser 4 with pressing chamber 5 is shown partly in section.

The chamber is opened in the normal manner by lifting free the plunger 6, after which a bag 1 with bulb 2 is placed in the chamber 5. It should be noted that the upper part of the bag 1 extends up above the chamber 5 as indicated in the drawing.

Hereafter, the plunger 6 is brought into the shown position and the pressing together of the two handgrips can commence.

The bag and the bulb are hereby pressed against the bottom 7, in that said bottom is provided with openings 8, e.g. in the form of one or more elongated openings, slots.

During the pressing-down in the chamber, the bulb juice is pressed out as drops 9 through the bag and through the openings 8 in the bottom of the garlic presser.

It should be noted that the bulb remains inside the bag, so that the remains, the pulp with the membrane, can easily and without inconvenience be removed from the garlic presser and discarded.

In this simple manner, garlic can be purchased and used in a hygienic way, and totally without the customary inconvenience of fingers smelling strongly of the garlic.

In the foregoing, garlic is mentioned as an example of the use of the method, but there will naturally not be anything to prevent other seasoning and spices to be packaged in bags and used in a corresponding manner.

## Claims

1. Method for pressing juice, oil out of bulbs such as garlic, which bulbs or parts thereof are placed in the chamber of a garlic presser and compressed for extraction of the juice, the oil, **characterised** in that the bulb (2) is placed in a bag (1), said bag (1) with bulb (2) being placed in the pressing chamber (5), after which the bag (1) with bulb (2) is compressed, so that the juice, the oil (9) is pressed out.

2. Method according to claim 1, **characterised** in that the bulb (2) is placed in a bag (1) which constitutes a packaging for the bulb (2).

3. Bag for use with the method according to claims 1 and 2, **characterised** in that the bag is made of a material which is tight, and which becomes permeable to juice once the bag is compressed with the bulb (2).

4. Bag for use with the method according to claim 3, **characterised** in that the bag (1) is made of a vegetable material.

5. Bag according to claims 3 and 4, **characterised** in that only that part of the bag (1) which surrounds the bulb (2) is configured in such a manner that it is permeable for juice, oil (9).

6. Garlic presser for the execution of the method according to claims 1 and 2, **characterised** in that the bottom (7) of the pressing chamber (5) is provided with one or more elongated openings, slots (8).
